(19) Europäisches Patentamt
European Patent Office
Office européen des brevets

(11) Veröffentlichungsnummer : **0 093 336**
**B1**

(12) # EUROPÄISCHE PATENTSCHRIFT

(45) Veröffentlichungstag der Patentschrift : **12.11.86**

(51) Int. Cl.[4] : **C 08 G 18/65**, C 08 G 18/50, C 08 G 18/14

(21) Anmeldenummer : **83103899.7**

(22) Anmeldetag : **21.04.83**

(54) **Verfahren zur Herstellung von kompakten oder zellhaltigen Formkörpern aus Polyharnstoff-Polyurethan-Elastomeren.**

(30) Priorität : **29.04.82 DE 3215907**

(43) Veröffentlichungstag der Anmeldung : **09.11.83 Patentblatt 83/45**

(45) Bekanntmachung des Hinweises auf die Patenterteilung : **12.11.86 Patentblatt 86/46**

(84) Benannte Vertragsstaaten : **BE DE FR GB IT NL SE**

(56) Entgegenhaltungen :
**EP-A- 0 033 498**
**DE-A- 2 627 879**
**GB-A- 1 517 720**
**US-A- 3 668 173**

(73) Patentinhaber : **BASF Aktiengesellschaft**
**Carl-Bosch-Strasse 38**
**D-6700 Ludwigshafen (DE)**

(72) Erfinder : **Nissen, Dietmar, Dr.**
**Ziegelhaeuser Landstrasse 31**
**D-6900 Heidelberg (DE)**
Erfinder : **Schoenleben, Willibald, Dr.**
**Blumenthalstrasse 41**
**D-6900 Heidelberg (DE)**
Erfinder : **Marx, Matthias, Dr.**
**Seebacher Strasse 49**
**D-6702 Bad Duerkheim (DE)**
Erfinder : **Illers, Karl Heinz, Dr.**
**Huttenstrasse 20**
**D-6701 Otterstadt (DE)**
Erfinder : **Simak, Petr, Dr.**
**Philipp-Scheidemann-Strasse 17**
**D-6700 Ludwigshafen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 093 336 B1

Jouve, 18, rue St-Denis, 75001 Paris, France

**Beschreibung**

Die Herstellung von vernetzten Kunststoffen nach dem Isocyanat-Polyadditionsverfahren ist bekannt. Nach Angaben der DE-AS 11 96 864 (US 3 099 516) werden hierzu Hydroxylgruppen aufweisende Verbindungen und Polyisocyanate in Gegenwart von Treibmitteln und Katalysatoren verschäumt. Bei geeigneter Wahl der Hydroxylgruppen aufweisenden Polyester, Polyether, Polyetherester, Polyesteramide u. a. und organischen Polyisocyanate sowie durch zusätzliche Mitverwendung von Kettenverlängerungsmitteln, wie z. B. Glykolen oder Diaminen, können nach dieser Methode sowohl elastische wie starre Polyurethane sowie alle dazwischen liegenden Modifikationen hergestellt werden.

Ein Verfahren zur Herstellung von gegebenenfalls zellhaltigen, elastischen Formkörpern mit einer geschlossenen Oberflächenschicht aus Polyurethan-Polyharnstoff-Elastomeren nach dem Prinzip der Reaktionsspritzgußtechnik wird in der DE-AS 26 22 951 (US 4 218 543) beschrieben. Die genannten Systeme bestehen im wesentlichen aus organischen Polyisocyanaten, Polyolen, aktiven aromatischen Di- bzw. Polyaminen, die in o-Stellung zur Aminogruppe gegebenenfalls durch Alkylgruppen substituiert sind und starken katalysatoren für die Reaktion zwischen Hydroxyl- und Isocyanatgruppen. Derartige Systeme besitzen Startzeiten bis herab zu weniger als einer Sekunde ; der Übergang der flüssigen in die feste Phase erfolgt nahezu schlagartig, was dazu führt, daß das flüssige Reaktionsgemisch in der Form an deren Wandungen gleichsam erstarrt.

Polyurethan-Polyharnstoff-Formulierungen mit etwas verminderter Reaktivität und dadurch verbesserter Fließfähigkeit werden nach Angaben der EP-OS 26 915 erhalten, wenn man als aromatische Diamine 3,3',5,5'-tetraalkylsubstituierte 4,4'-Diamino-diphenylmethane verwendet, in denen die Alkylreste gleich oder verschieden sind und einen Methyl-, Ethyl-, Isopropyl-, sek.- oder tert. Butylrest bedeuten, wobei mindestens einer der Substituenten ein Isopropyl- oder sek. Butylrest sein muß.

Es ist ferner bekannt, Polyoxyalkylen-polyamine nach dem Prepolymer-Verfahren zu faserbildenden linearen Polyharnstoffelastomeren oder Mischungen aus Glykolen oder aromatischen Aminen und Polyoxyalkylen-polyaminen als Kettenverlängerungsmittel zur Herstellung von gegebenenfalls zelligen Polyurethan-Polyharnstoffen zu verwenden. Hierbei ergaben sich Verarbeitungsprobleme aufgrund der hohen Reaktivität der aliphatisch gebundenen Aminogruppen.

Zur Beseitigung dieser Schwierigkeiten werden nach Angaben der US-PS 3 668 173 die Polyurethan-Polyharnstoffmassen nach dem Prepolymerverfahren hergestellt, wobei die Umsetzung verdünnt in organischen Lösungsmitteln und unter Verwendung von weniger reaktiven aliphatischen Polyisocyanaten durchgeführt wird.

Zur Herstellung von Polyurethanschaumstoffen nach der DE-PS 1 287 308 (US 3 256 213) wird das Polyoxyalkylen-polyamin in Form seines wasserfreien säuresalzes zusammen mit einer basischen Verbindung in einer der Säuren etwa entsprechenden Menge verwendet.

Die EP-OS 33 498 (US-PS 4 269 945) beschreibt die Verwendung von Mischungen aus di- bis tetrafunktionellen Hydroxylverbindungen mit durchschnittlichen OH-Äquivalentgewichten von 30 bis 120 oder aromatischen Aminoverbindungen und Polyoxyalkylen-Polyaminen mit Molekulargewichten kleiner als 1 000 als Kettenverlängerungsmittel.

Polyoxyalkylen-Polyamine finden ferner Verwendung als Ausgangsstoff zur Herstellung von Polyurethan-Überzügen gemäß US-A-3 668 173 und Polyurethan-Hartschaumstoffen gemäß GB-A-1 517 720.

Die faserbildenden linearen Polyharnstoffelastomeren gemäß DE-OS 1 595 020 (US 3 359 243) werden ebenfalls nach dem zweistufigen Prepolymerverfahren in einem Lösungsmittel hergestellt, das später wieder in einem kostspieligen, separaten Verfahrensschritt abgetrennt werden muß.

Die genannten Verfahren weisen gemeinsam den Nachteil auf, daß keine Polyurethan-Polyharnstoff-Formteile in einem Reaktionsschritt in Abwesenheit von Lösungsmitteln hergestellt werden können.

Aufgabe der vorliegenden Erfindung war es, Polyurethan-Polyharnstoff-Formulierungen zu entwickeln, die als Prepolymer- oder vorzugsweise one shot Systeme, insbesondere nach der Methode der Reaktionsspritzgußtechnik, im folgenden kurz « RIM » genannt, in Abwesenheit von Lösungsmitteln zu zelligen oder vorzugsweise kompakten Formkörpern mit sehr guter Oberflächenstruktur und verbesserten mechanischen Eigenschaften verarbeitet werden können.

Diese Aufgabe konnte überraschenderweise gelöst werden durch ein Verfahren zur Herstellung von kompakten oder zellhaltigen Formkörpern auf Basis von Polyurethan-Polyharnstoff-Elastomeren durch Umsetzung von

a) organischen Polyisocyanaten,
b) Polyether-polyaminen und
c) Kettenverlängerungsmitteln gegebenenfalls in Gegenwart von
d) Treibmitteln,
e) Hilfsmitteln und/oder
f) Zusatzstoffen,

das dadurch gekennzeichnet ist, daß man als Polyether-polyamine (b) Polyoxyalkylen-polyamine mit einer Funktionalität von 2 bis 8 und einem Molekulargewicht von 1 100 bis 16 000 und als Kettenverlängerungsmittel (c) di- bis tetrafunktionelle aliphatische und/oder araliphatische

Polyole mit Molekulargewichten von 60 bis 400 oder Mischungen aus den genannten Polyolen und

primären aromatischen Diaminen in Mengen von 5 bis 150 Gew.-Teilen pro 100 Gew.-Teilen Polyoxyalkylenpolyamine (b) verwendet und das Äquivalenzverhältnis von NCO-Gruppen der Polyisocyanate (a) zu Zerewitinoff aktiven Wasserstoffatome gebunden an OH- und $NH_2$-Gruppen der Komponenten (b) und (c) 1 : 0,85 bis 1,25 beträgt.

Die nach dem erfindungsgemäßen Verfahren hergestellten Formkörper aus Polyurethan-Polyharnstoff-Elastomeren zeichnen sich durch gute Zugdehnungs- und Weiterreißfestigkeitswerte sowie eine sehr gute Wärmeform- und Wärmealterungsbeständigkeit aus.

Besonders vorteilhaft ausgeprägt ist das rheologische Verhalten des Reaktionsgemisches bei der Herstellung des Formkörper. Durch die Verwendung der sehr reaktiven Polyoxyalkylen-polyamine anstelle von Polyoxyalkylen-polyolen als Weichkomponente im Elastomeren steigt bei der Umsetzung mit den Polyisocyanaten die Viskosität des Reaktionsgemisches sehr rasch an, ohne jedoch die Fließfähigkeit zu verlieren. Die langsamer reagierenden aliphatischen und/oder araliphatischen Polyole oder Mischungen aus den genannten Polyolen und primären aromatischen Diaminen, die als Hartsegmente wirken, ergeben ein thermoplastähnliches Spritzgußverhalten, das sich in einer ausgezeichneten Formkörperoberflächenqualität, leichten Entformbarkeit und einer geringen Ausbildung von Schwimmhäuten zeigt. Derartige Oberflächeneigenschaften konnten bisher auf Basis von Polyurethan-Elastomeren nicht erzielt werden.

Zu den für das erfindungsgemäße Verfahren verwendbaren Aufbaukomponenten (a) bis (c) sowie gegebenenfalls (d) bis (f) ist folgendes auszuführen :

Als organische Polyisocyanate (a) kommen aliphatische, cycloaliphatische, araliphatische und vorzugsweise aromatische mehrwertige Isocyanate in Frage. Im einzelnen seien beispielhaft genannt : Alkylendiisocyanate mit 4 bis 12 Kohlenstoffatomen im Alkylenrest, wie 1,12-Dodecandiisocyanat, Tetramethylen-diisocyanat-1,4 und vorzugsweise Hexamethylen-diisocyanat-1,6 ; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie entsprechende Isomerengemische, 4,4'-, 2,2'- und 2,4'-Dicyclohexylmethan-diisocyanat sowie die entsprechenden Isomerengemische und vorzugsweise aromatische Di- und Polyisocyanate, wie 4,4'-, 2,4'- und 2,2'-Diisocyanatodiphenylmethan und die entsprechenden Isomerengemische, 2,4'- und 2,6-Diisocyanato-toluol und die entsprechenden Isomerengemische, 1,5-Diisocyanato-naphthalin, Polyphenyl-polymethylen-polyisocyanate, 2,4,6-Triisocyanato-toluol und vorzugsweise Gemische aus Diphenylmethan- und Polyphenyl-polymethylen-polyisocyanaten (Roh-MDI). Die genannten Di- und Polyisocyanate können einzeln oder in Form von Mischungen eingesetzt werden.

Häufig werden auch sogenannte modifizierte mehrwertige Isocyanate, d. h. Produkte die durch chemische Umsetzung von Di- und/oder Polyisocyanaten erhalten werden verwendet. Als modifizierte organische Di- und Polyisocyanate kommen beispielsweise in Betracht : Carbodiimidgruppen aufweisende Polyisocyanate gemäß DE-PS 10 92 007, Allophanatgruppen aufweisende Polyisocyanate, wie sie z. B. in der britischen Patentschrift 994 890, den ausgelegten Unterlagen des belgischen Patents 761 626 und der NL-OS-71 02 524 beschrieben werden, Isocyanuratgruppen aufweisende Polyisocyanate wie sie z. B. in den DE-PS 10 22 789, 12 22 067 und 10 27 394 sowie den DE-OS 19 29 034 und 20 04 048 beschrieben werden, Urethangruppen aufweisende Polyisocyanate, wie sie z. B. in den ausgelegten Unterlagen des belgischen Patents 752 261 oder der US-PS 33 94 164 beschrieben werden, acylierte Harnstoffgruppen aufweisende Polyisocyanate z. B. gemäß DE-PS 12 30 778, Biuretgruppen aufweisende Polyisocyanate z. B. gemäß DE-PS 11 01 394 und GB-PS 889 050 ; durch Telomerisationsreaktionen hergestellte Polyisocyanate z. B. entsprechend den ausgelegten Unterlagen des belgischen Patents 723 640, Estergruppen aufweisende Polyisocyanate, wie sie z. B. in der GB-PS 965 474 und 10 72 956, der US-PS 35 67 765 und der DE-PS 12 31 688 genannt werden.

Vorzugsweise kommen jedoch zur Anwendung ; urethangruppenhaltige Polyisocyanate, beispielsweise mit niedermolekularen Diolen, Triolen oder Polyoxypropylen- bzw. Polyoxyethylenglykolen, modifiziertes 4,4'-Diphenylmethan-diisocyanat oder Toluylen-diisocyanat, Carbodiimidgruppen und/oder Isocyanuratringe enthaltende Polyisocyanate, z. B. auf Diphenylmethan-diisocyanat und/oder Toluylendiisocyanat-Basis und insbesondere Toluylendiisocyanate, Diphenylmethan-diisocyanate, Mischungen aus Diphenylmethan-diisocyanaten und Polyphenyl-polymethylen-polyisocyanaten (Roh-MDI) und Gemische aus Toluylendiisocyanaten und Roh-MDI.

Als Polyether-polyamine (b), die in den Polyharnstoff-polyurethan-Elastomeren als Weichsegmente fungieren, werden bei dem erfindungsgemäßen Verfahren lineare und/oder verzweigte, d. h. di- bis octafunktionelle und insbesondere di- bis trifunktionelle Polyoxyalkylen-polyamine mit Molekulargewichten von 1 100 bis 16 000, vorzugsweise von 1 500 bis 12 000, verwendet. Besonders bewährt haben sich und daher vorzugsweise verwendet werden Polyoxyalkylen-polyamine (b) der allgemeinen Formeln

$$H_2N—(R^2O)_x—R^1—NH_2, \qquad (I)$$

$$H_2N—R^1—(OR^2)_x—NH—(R^2O)_y—R^1—NH_2, \qquad (II)$$

(Siehe Formel 3 Seite 4 f.)

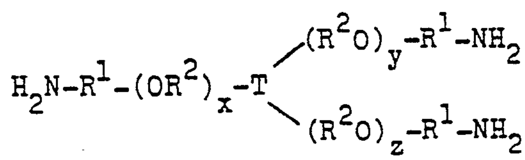

(III)

und/oder

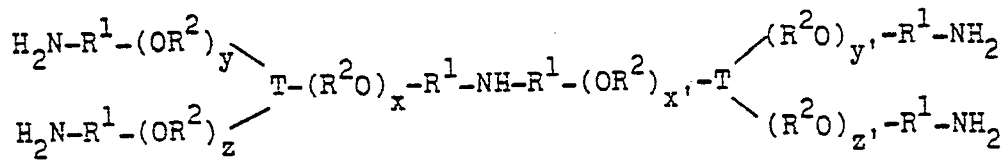

(IV)

in denen bedeuten :

$R^1$ und $R^2$ gleiche oder verschiedene, gegebenenfalls substituierte Alkylenreste mit 2 bis 10 Kohlenstoffatomen, wobei die Alkylenreste $R^2$ der Alkoxygruppen ebenfalls gleich oder verschieden sein können,

T ein von reaktiven Wasserstoffatomen befreiter Rest eines trifunktionellen Startermolekuls für die Alkylenoxidpolymerisation und

x, x', y, y', z und z' gleiche oder verschiedene ganze Zahlen größer als null, vorzugsweise von 4 bis 45 und insbesondere von 10 bis 35, so daß die Summe ein Molekulargewicht von 1 100 oder größer ergibt.

Die genannten Polyoxyalkylen-polyamine können einzeln oder als Mischungen eingesetzt werden. Vorzugsweise Anwendung finden Mischungen aus Polyoxyalkylen-polyaminen der Formeln (I) und (II) und solche der Formeln (III) und (IV), wobei die Mischungsverhältnisse von (I) : (II) bzw. (III) : (IV) in den Bereichen von 99,5 : 0,5 bis 20 : 80, vorzugsweise 99,5 : 0,5 bis 50 : 50 liegen.

Die erfindungsgemäß verwendbaren Polyoxyalkylen-polyamine können nach bekannten Verfahren hergestellt werden. Beispielhaft genannt seien die Cyanoalkylierung von Polyoxyalkylen-polyolen und anschliessende Hydrierung des gebildeten Nitrils (US 3 267 050) oder die Aminierung von Polyoxyalkylen-polyolen mit Aminen oder Ammoniak in Gegenwart von Wasserstoff und Katalysatoren (DE 12 15 373).

Geeignete Polyoxyalkylen-polyole können ihrerseits erhalten werden durch Addition von einem oder mehreren Alkylenoxiden mit 2 bis 10 Kohlenstoffatomen im Alkylenrest, wie z. B. Tetrahydrofuran, 1,3-Propylenoxid, 1,2- bzw. 2,3-Butylenoxid, Styroloxid und vorzugsweise Ethylenoxid und 1,2-Propylenoxid an ein Startermolekül, das 2 bis 8, vorzugsweise 2 bis 3 reaktive Wasserstoffatome gebunden enthält.

Als Startermoleküle kommen vorzugsweise in Betracht : Wasser, Ammoniak, Alkanolamine, wie z. B. Ethanolamin, Diethanolamin, N-Methyl- und N-Ethyl-ethanolamin, N-Methyl- und N-Ethyl-diethanolamin und Triethanolamin und insbesondere mehrwertige, vorzugsweise zwei- und/oder dreiwertige Alkohole, wie z. B. Ethylen-, 1,2- und 1,3-Propylen-, Diethylen-, Dipropylen-, 1,4-Butylen-, 1,6-Hexamethylen-glykol, Glycerin, Trimethylolpropan, Pentaerythrit, Sorbit und Saccharose.

Als Kettenverlängerungsmittel (c) werden beim erfindungsgemäßen Verfahren di- bis tetrafunktionelle, vorzugsweise di- und/oder trifunktionelle araliphatische und/oder vorzugsweise aliphatische Polyole mit Molekulargewichten von 60 bis 400, vorzugsweise 60 bis 300, verwendet. In Betracht kommen beispielsweise aliphatische und/oder araliphatische Diole mit 2 bis 14, vorzugsweise 2 bis 6 Kohlenstoffatomen, wie Ethylenglykol, Propandiol-1,3, Butandiol-1,4, Pentandiol-1,5, Hexandiol-1,6, Octandiol-1,8, Decandiol-1,10, Diethylenglykol, Dipropylenglykol und Bis-(2-hydroxyethyl)-hydrochinon, Triole, wie Glycerin und Trimethylolpropan, Tetrole, wie Pentaerythrit und niedermolekulare hydroxylgruppenhaltige Polyoxyalkylenpolyether auf Basis Ethylenoxid und/oder Propylenoxid und den vorgenannten Polyolen oder aliphatischen Diaminen mit Molekulargewichten von 60 bis 116 als Startermoleküle.

Als Kettenverlängerungsmittel (c) geeignet sind ferner Mischungen aus den obengenannten erfindungsgemäß verwendbaren Polyolen und primären aromatischen Diaminen. Zweckmäßigerweise verwendet werden aromatische Diamine, deren primäre Aminogruppen gegenüber Polyisocyanaten keine durch elektronenanziehende Substituenten verursachte verminderte Reaktivität zeigen oder vorteilhafterweise solche aromatischen Diamine, deren primäre Aminogruppen sterisch gehindert sind. Insbesondere Anwendung finden solche primären aromatischen Diamine, die bei Raumtemperatur flüssig und mit den Polyoxyalkylen-polyaminen (b) und den Polyolen unter den Verarbeitungsbedingungen ganz oder zumindest teilweise mischbar sind. Bewährt haben sich beispielsweise meta-Phenylendiamin und/oder vorzugsweise alkylsubstituierte meta-Phenylendiamine der Formeln

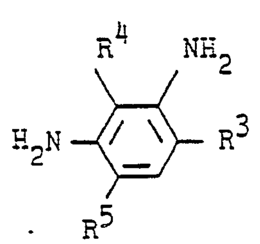

und/oder

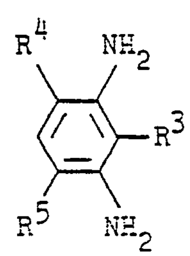

in denen $R^3$ ein Wasserstoffatom oder ein linearer oder verzweigter Alkylrest mit 1 bis 10, vorzugsweise 1 bis 6 Kohlenstoffatomen ist und $R^4$ und $R^5$ gleiche oder verschiedene Alkylreste mit 1 bis 3 Kohlenstoffatomen, wie z. B. ein Methyl-, Ethyl-, Propyl- oder Isopropylrest sind. Geeignet sind insbesondere solche Alkylreste $R^3$, bei denen die Verzweigungsstelle am $C^1$-Kohlenstoffatom sitzt. Neben Wasserstoff seien als Alkylreste $R^3$ beispielhaft genannt : der Methyl-, Ethyl-, n- und iso-Propyl-, Butyl-, Hexyl-, Octyl-, Decyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl- und vorzugsweise der Cyclohexyl-, 1-Methyl-n-propyl-, tert.-Butyl-, 1-Ethyl-n-propyl-, 1-Methyl-n-butyl- und 1,1-Dimethyl-n-propylrest.

Als alkylsubstituierte m-Phenylendiamine kommen beispielsweise in Betracht : 2,4-Dimethyl-, 2,4-Diethyl-, 2,4-Diisopropyl-, 2,4-Diethyl-6-methyl-, 2-Methyl-4,6-diethyl-, 2,4,6-Triethyl-, 2,4-Dimethyl-6-cyclohexyl-, 2-Cyclohexyl-4,6-diethyl-, 2-Cyclohexyl-2,6-diisopropyl-, 2,4-Dimethyl-6-(1-ethyl-n-propyl)-, 2,4-Dimethyl-6-(1,1-dimethyl-n-propyl)- und 2-(1-Methyl-n-butyl)-4,6-dimethylphenylendiamin-1,3.

Bewährt haben sich ferner Diamino-diphenylmethane, wie z. B. 4,4'- und/oder 2,4'-Diamino-diphenylmethan, 3,3'-di- und 3,3',5,5'-tetra-n-alkylsubstituierte 4,4'-Diamino-diphenylmethane wie z. B. 3,3'-Dimethyl-, 3,3',5,5'-Tetramethyl-, 3,3'-Diethyl-, 3,3',5,5'-Tetraethyl- und 3,3',5,5'-Tetra-n-propyl-4,4'-diamino-diphenylmethan.

Anwendung finden vorteilhafterweise Diamino-diphenylmethane der Formel

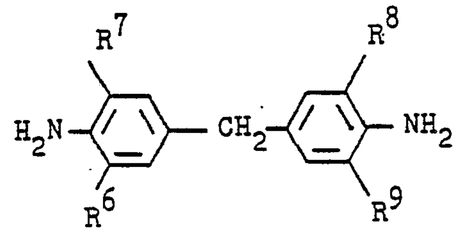

in der $R^6$, $R^7$, $R^8$ und $R^9$ gleich oder verschieden sind und einen Methyl-, Ethyl-, Propyl-, Isopropyl-, sek.-Butyl- und tert.-Butylrest bedeuten, wobei jedoch mindestens einer der Reste ein Isopropyl- oder sek. Butylrest sein muß. Die 4,4'-Diamino-diphenylmethane können auch im Gemisch mit Isomeren der Formeln

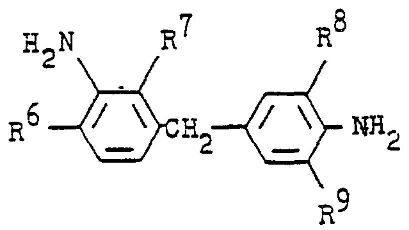 und/oder 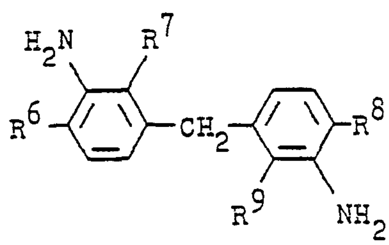

verwendet werden, wobei $R^6$, $R^7$, $R^8$ und $R^9$ die obengenannte Bedeutung haben.

Beispielhaft genannt seien : 3,3',5-Trimethyl-5'-isopropyl-, 3,3',5-Triethyl-5'-isopropyl-, 3,3',5-Trimethyl-5'-sek-butyl-, 3,3',5-Triethyl-5'-sek-butyl-4,4'-diamino-diphenylmethan, 3,3'-Dimethyl-5,5'-diisopropyl-, 3,3'-Diethyl-5,5'-diisopropyl-, 3,3'-Dimethyl-5,5'-di-sek-butyl-, 3,3'-Diethyl-5,5'-di-sek-butyl-, 3,5-Dimethyl-3',5'-diisopropyl-, 3,5-Diethyl-3',5'-diisopropyl-, 3,5'-Dimethyl-3',5-di-sek-butyl-, 3,5-Diethyl-3',5'-di-sek-butyl-4,4'-diamino-diphenylmethan, 3-Methyl-3',5,5'-triisopropyl-, 3-Ethyl-3',5,5'-triisopropyl-, 3-Methyl-3',5,5'-tri-sek-butyl-, 3-Ethyl-3',5,5'-tri-sek-butyl-4,4'-diamino-diphenylmethan, 3,3'-Diisopropyl-5,5'-di-sek-butyl-, 3,5-Diisopropyl-3',5'-di-sek.-butyl-, 3-Ethyl-5-sek-butyl-3',5'-diisopropyl-, 3-Methyl-5-tert.-butyl-3',5'-diisopropyl-, 3-Ethyl-5-sek.-butyl-3'-methyl-5'-tert.-butyl-, 3,3',5,5'-Tetraisopropyl- und 3,3',5,5'-Tetra-sek-butyl-4,4'-diaminodiphenylmethan.

Vorzugsweise verwendet werden folgende primären aromatischen Diamine : 2,4-Diethyl-, 2,4-Dimethyl-phenylen-diamin-1,3, 2,4-Diethyl-6-methyl-, 2-Methyl-4,6-diethyl-phenylendiamin-1,3, 2,4,6-Triethyl-phenylendiamin-1,3, 2,4-Dimethyl-6-tert.-butyl-, 2,4-Dimethyl-6-isooctyl- und 2,4-Dimethyl-6-cyclohexyl-phenylendiamin-1,3 sowie 3,5-Dimethyl-3',5'-diisopropyl- und 3,3',5,5'-Tetraisopropyl-4,4'-diamino-diphenylmethan.

Die als Kettenverlängerungsmittel (c) geeigneten Polyole können einzeln oder in Form von Polyolmischungen eingesetzt werden. Sofern als Kettenverlängerungsmittel (c) Mischungen aus Polyolen und Diaminen Anwendung finden, enthalten diese vorteilhafterweise pro 100 Gew.-Teile Polyol oder -mischung 5 bis 200, vorzugsweise 50 bis 100 Gew.-Teile Diamin oder -mischung.

Die di- bis tetrafunktionellen aliphatischen und/oder araliphatischen Polyole oder Mischungen aus den genannten Polyolen und primären aromatischen Diaminen werden beim erfindungsgemäßen Verfahren üblicherweise in Mengen von 5 bis 150 Gew.-Teilen, vorzugsweise 8 bis 100 Gew.-Teilen, bezogen auf 100 Gew.-Teile Polyoxyalkylen-polyamin verwendet.

Zu Treibmitteln (d), welche im erfindungsgemäßen Verfahren gegebenenfalls verwendet werden können, gehört Wasser, das mit Isocyanatgruppen unter Bildung von Kohlendioxid reagiert. Die Wassermengen, die zweckmäßigerweise verwendet werden können, betragen 0,5 bis 2 Gew.-%, bezogen auf das Gewicht an Polyoxyalkylen-polyamin.

Andere verwendbare Treibmittel sind niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100 °C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan.

Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von zellhaltigen Polyharnstoff-Polyurethan-Formkörpern hängt ab von der Dichte, die man erreichen will sowie gegebenenfalls von der Mitverwendung von Wasser. Im allgemeinen liefern Mengen von 0,5 bis 15 Gew.-Teilen, bezogen auf 100 Gew.-Teile Polyoxyalkylen-polyamin, zufriedenstellende Ergebnisse.

Der Reaktionsmischung können gegebenenfalls auch noch Hilfsmittel (e) und/oder Zusatzstoffe (f) einverleibt werden. Genannt seien beispielsweise Katalysatoren, oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als Katalysatoren werden insbesondere Verbindungen verwendet, die die Reaktion der hydroxylgruppenhaltigen Kettenverlängerungsmittel (c) mit den Polyisocyanaten (a) stark beschleunigen. In Betracht kommen organische Metallverbindungen, vorzugsweise organische Zinnverbindungen, wie Zinn-(II)-Salze von organischen Carbonsäuren, z. B. Zinn-(II)-acetat, Zinn-(II)-octoat, Zinn-(II) ethylhexoat und Zinn-(II)-laurat und die Dialkylzinn-(IV)-salze von organischen Carbonsäuren, z. B. Dibutyl-zinndiacetat, Dibutyl-zinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin oder insbesondere monocyclische Amidine gemäß deutscher Patentanmeldung P 31 26 436.0, tertiäre Amine, wie Triethylamin, Tributylamin, Dimethylbenzylamin, N-Methyl-, N-Cyclohexylmorpholin, N,N,N',N'-Tetramethyl-ethylendiamin, N,N,N',N'-Tetramethyl- butandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan und Alkanolverbindungen, wie Triethanolamin, Triisopropanolamin, N-Methyl- und N-Ethyl-diethanolamin und Dimethylethanolamin.

Als Katalysatoren kommen ferner in Betracht : Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-%, Katalysator bzw. Katalysatorkombination, bezogen auf das Gewicht der Polyether-polyamine (b).

Als oberflächenaktive Substanzen kommen Verbindungen in Betracht, welche zur Unterstützung der Homogenisierung der Ausgangsstoffe dienen und gegebenenfalls auch geeignet sind die Zellstruktur zu regulieren. Genannt seien beispielsweise Emulgatoren, wie die Natriumsalze von Ricinusölsulfaten oder von Fettsäuren sowie Salze von Fettsäuren mit Aminen, z. B. ölsaures Diethylamin oder stearinsaures Diethanolamin, Salze von Sulfonsäuren, z. B. Alkali- oder Ammoniumsalze von Dodecylbenzol- oder Dinaphthylmethandisulfonsäure und Ricinolsäure ; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteile Polyoxyalkylen-polyamin angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien beispielhaft genannt : anorganische Füllstoffe wie silikatische Mineralien, beispielsweise Schichtsilikate, wie Antigorit, Serpentin, Hornblenden, Amphibole, Chrisotil, Talkum ; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u. a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest, Wollastonit und insbesondere Glasfasern verschiedener Länge, die gegebenenfalls geschlichtet sein können. Als organische Füllstoffe kommen beispielsweise in Betracht : Kohle, Melamin, Kollophonium, Cyclopentadienylharze und Pfropfpolymerisate auf Styrol-Acrylnitrilbasis, die durch *in situ* Polymerisation von Acrylnitril-Styrol-Mischungen in Polyetherolen analog den Angaben der deutschen Patentschriften 11 11 394, 12 22 669, (US 3 304 273, 3 383 351, 3 523 093) 11 52 536 (GB 1 040 452) und 11 52 537 (GB 987 618) hergestellt und danach aminiert werden

sowie Filler-polyoxyalkylen-polyamine, bei denen wäßrige Polymerdispersionen in Polyoxyalkylen-polyamindispersionen übergeführt werden.

Die anorganischen und organischen Füllstoffe können einzeln oder als Gemische verwendet werden. Vorzugsweise Anwendung finden stabile Füllstoff-Polyoxyalkylen-polyamin-Dispersionen, bei denen die Füllstoffe in Gegenwart von Polyoxyalkylen-polyaminen *in situ* mit hohen örtlichen Energiedichten auf eine Teilchengröße kleiner als 7 μm zerkleinert und hierbei gleichzeitig dispergiert werden.

Die anorganischen und organischen Füllstoffe werden der Reaktionsmischung vorteilhafterweise in Mengen von 0,5 bis 50 Gew.%, vorzugsweise 1 bis 40 Gew.%, bezogen auf das Gewicht der Polyisocyanat-Polyoxyalkylen-polyamin-Mischung einverleibt.

Geeignete Flammschutzmittel sind beispielsweise Trikresylphosphat, Tris-2-chlorethylphosphat, Tris-chlorpropylphosphat und Tris-2,3-dibrompropylphosphat.

Außer den bereits genannten halogensubstituierten Phosphaten können auch anorganische Flammschutzmittel, wie Aluminiumoxidhydrat, Antimontrioxid, Arsenoxid, Ammoniumpolyphosphat und Calciumsulfat sowie Veresterungsprodukte niedermolekularer Polyole und halogenierter Phthalsäurederivate zum Flammfestmachen der Formkörper verwendet werden. Im allgemeinen hat es sich als zweckmäßig erwiesen, 5 bis 50 Gewichtsteile, vorzugsweise 5 bis 25 Gewichtsteile der genannten Flammschutzmittel für jeweils 100 Gewichtsteile an Polyoxyalkylen-polyamin zu verwenden.

Nähere Angaben über die obengenannten anderen üblichen Hilfs- und Zusatzstoffe sind der Fachliteratur, beispielsweise der Monographie von J. H. Saunders und K. C. Frisch « High Polymers » Band XVI, Polyurethanes, Teil 1 und 2, Verlag Interscience Publishers 1962 bzw. 1964, zu entnehmen.

Zur Herstellung der kompakten oder zellhaltigen Formkörper auf Basis von Polyharnstoff-Polyurethan-Elastomeren werden die organischen Polyisocyanate, Polyoxyalkylen-polyamine und Kettenverlängerungsmittel in solchen Mengen zur Umsetzung gebracht, daß das Verhältnis von NCO-Gruppen zu Zerewitinoff aktiven Wasserstoffatomen, gebunden an OH- oder $NH_2$-Gruppen 1 : 0,85 bis 1,25, vorzugsweise 1 : 0,95 bis 1,15 beträgt.

Die Herstellung der zellhaltigen und vorzugsweise kompakten Polyharnstoff-Polyurethan-Formkörper erfolgt nach dem Prepolymer- oder vorzugsweise nach dem one shot-Verfahren mit Hilfe der bekannten Reaktionsspritzguß-Technik. Diese Verfahrensweise wird beispielsweise beschrieben von Piechota und Röhr in « Integralschaumstoffe », Carl-Hanser-Verlag, München, Wien 1975 ; D. J. Prepelka und J. L. Wharton in Journal of Cellular Plastics, März/April 1975, Seiten 87 bis 98 und U. Knipp in Journal of Cellular Plastics, März/April 1973, Seiten 76 bis 84. Die Formulierungen lassen sich jedoch auch auf konventionelle Art verarbeiten.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen nach dem Zweikomponenten-Verfahren zu arbeiten und die Kettenverlängerungsmittel in den Polyoxyalkylen-polyaminen zu lösen und gegebenenfalls mit Treibmitteln, Hilfs- und Zusatzstoffen in der Komponente A zu vereinigen und als Komponente B die organischen Polyisocyanate zu verwenden.

Die Menge des in die Form eingebrachten Reaktionsgemisches wird so bemessen, daß die erhaltenen mikrozellularen bzw. kompakten Formkörper eine Dichte von 0,8 bis 1,4 g/cm³, vorzugsweise von 0,9 bis 1,35 g/cm³ und die zellhaltigen Formkörper eine Dichte von 0,2 bis 1,1 g/cm³, vorzugsweise von 0,25 bis 0,7 g/cm³ aufweisen. Die Ausgangskomponenten werden mit einer Temperatur von 15 bis 70 °C, vorzugsweise von 20 bis 55 °C in die Form eingebracht. Die Formtemperatur beträgt zweckmäßigerweise 20 bis 90 °C, vorzugsweise 35 bis 70 °C. Gegebenenfalls kann auf die übliche Anwendung von Formtrennmitteln, beispielsweise auf Wachs- oder Silikonbasis, zur Verbesserung der Entformung verzichtet werden oder ihre Anwendung ist nur nach mehreren Formfüllvorgängen notwendig. Die Verdichtungsgrade zur Herstellung der mikrozellularen oder zellhaltigen Formkörper liegen zwischen 1,1 und 8, vorzugsweise zwischen 2 und 8.

Die nach dem erfindungsgemäßen Verfahren erhältlichen kompakten bzw. mikrozellularen Polyharnstoff-Polyurethan-Formkörper eignen sich insbesondere zur Verwendung in der Automobilindustrie, beispielsweise als Stoßstangenabdeckungen und Karosserieteile wie Kotflügel, Spoiler und Radkästenverbreiterungen sowie technische Gehäuseteile und Laufrollen.

Die in den Beispielen genannten Teile beziehen sich auf das Gewicht.

## Beispiel 1

A-Komponente :

In 77,72 Gew.-Teilen eines Blockcopolyoxyalkylen-polyamins mit einer Aminzahl von 27 und einer OH-Zahl von 0, das hergestellt wurde durch Aminierung eines Polyether-polyols auf Basis Dipropylenglykol-Propylenoxid-Ethylenoxid, wurden 19,21 Gew.-Teile Ethylenglykol gelöst und danach mit 3,07 Gew.-Teilen Methylenchlorid intensiv vermischt.

B-Komponente :

Urethanmodifiziertes Polyisocyanat mit einem NCO-Gehalt von 23 Gew.%, das hergestellt wurde

durch Umsetzung von 4,4'-Diphenylmethan-diisocyanat und Dipropylenglykol.

100 g der A-Komponente und

126 g der B-Komponente — entsprechend einem Isocyanatindex von 105 — wurden nach dem RIM-Verfahren auf einer Hochdruckdosieranlage vom Typ ®Puromat 30 der Elastogran Maschinenbau verarbeitet.

Die A- und B-Komponente und die verschließbare Plattenform aus Aluminium (500 × 300 × 4 mm) wurden auf 50 °C temperiert. Der Verdichtungsgrad betrug 2,2. An der Testplatte wurden die in der folgenden Tabelle zusammengefaßten mechanischen Eigenschaften gemessen.

## Vergleichsbeispiel

A-Komponente :

Mischung aus

77,33 Gew.-Teilen eines Blockcopolyetherdiols auf Basis Dipropylenglykol-Propylenoxid-Ethylenoxid mit einer OH-Zahl von 29,

18,78 Gew-Teilen Ethylenglykol,

0,57 Gew-Teilen einer 25 gew.%igen Lösung von Diazabicyclooctan in Ethylenglykol,

0,25 Gew.-Teilen eines Hexahydro-1-(3,4,5,6-tetrahydro-7H-azepin-2-yl)-1H-azepin-Dibutylzinndilaurat-Komplexes und

3,07 Gew-Teilen Methylenchlorid.

B-Komponente : analog Beispiel 1

Die Prüfplatte wurde analog den Angaben von Beispiel 1 hergestellt. Die ermittelten mechanischen Eigenschaften sind in der folgenden Tabelle zusammengefaßt.

Tabelle : Mechanische Eigenschaften von mikrozellularen Prüfplatten

| Eigenschaften | | Beispiel 1 | Vergleichs-beispiel |
|---|---|---|---|
| Rohdichte | [$g/cm^3$] | 1,05 | 1,05 |
| Knicktest[1)] | [sec] | 25 | 50 |
| Reißdehnung | [%] | 250 | 310 |
| Reißfestigkeit | [$N/mm^2$] | 27 | 20 |
| Weiterreißfestigkeit | [N/mm] | 135 | 72 |
| Wärmeformbeständigkeit[2)] | [°C] | 95 | 70 |
| Biege-E-Modul | [$N/mm^2$] | 560 | 480 |
| Härte | [Shore-D] | 66 | 58 |
| Oberfläche | | glatt glänzend | matt |
| Schwimmhautbildung | | praktisch keine | stark |

[1] Die Prüfplatten zeigten zu diesem Zeitpunkt beim Umbeigen um 180° keine Rißbildung

[2] nach ISO-R-75 Methode B

## Beispiel 2a und 2b

A-Komponente :

In 64,1 Gew.-Teilen des Blockcopolyoxyalkylen-polyamins nach Beispiel 1 werden 35,0 Gew.-Teile 3,3',5,5'-Tetraisopropyl-4,4'-diamino-diphenylmethan gelöst und diese Lösung mit 0,5 Gew.-Teilen eines

Polyether-polyols auf Basis Trimethylolpropan-Ethylenoxid mit einer OH-Zahl von 930, 0,3 Gew.-Teilen einer 33 gew.-%igen Lösung von Diazabicyclooctan in Ethylenglykol und 0,1 Gew.-Teilen eines Hexahydro-1-(3,4,5,6-tetrahydro-7H-azepin-2-yl)-1H-azepindibutylzinndilaurat-Komplexes intensiv gemischt.

B-Komponente :

Partiell carbodiimidisiertes 4,4'-Diphenylmethan-diisocyanat mit einem NCO-Gehalt von 29,5 %.

100 Gew.-Teile der auf 70 °C temperierten A-Komponente und

36 Gew.-Teile der auf 50 °C temperierten B-Komponente — entsprechend einem Isocyanatindex von 105 — wurden analog den Angaben von Beispiel 1 in einer 50 °C warmen Metallform mit den inneren Abmessungen 500 × 300 × 4 mm zu Testplatten verarbeitet.

Nach Beispiel 2a war die Testplatte ungetempert, während sie gemäß Beispiel 2b nach der Herstellung eine Stunde bei 120 °C getempert wurde.

An den Testplatten wurden folgende mechanische Eigenschaften gemessen :

| Eigenschaften | | Beispiele 2a | 2b |
|---|---|---|---|
| Rohdichte | [$g/cm^3$] | 107 | 107 |
| Knicktest[1)] | [sec] | 30 | 30 |
| Reißdehnung | [%] | 370 | 340 |
| Reißfestigkeit | [$N/mm^2$] | 28 | 29 |
| Weiterreißfestigkeit | [N/mm] | 103 | 115 |
| Wärmeformbeständigkeit[2)] | [°C] | 123 | 151 |
| Härte | [Shore-D] | 62 | 63 |
| Biege-E-Modul | | | |
| -30°C | [$N/mm^2$] | 1040 | 1030 |
| 23°C | [$N/mm^2$] | 530 | 540 |
| 65°C | [$N/mm^2$] | 340 | 330 |

[1] Die Prüfplatten zeigten zu diesem Zeitpunkt beim Umbiegen um 180° keine Rißbildung.
[2] nach ISO-R-75 Methode B.

Beispiel 3

A-Komponente : analog Beispiel 2a

B-Komponente :

Umsetzungsprodukt mit einem NCO-Gehalt von 16,9 Gew.%, hergestellt aus 4,4'-Diphenylmethandiisocyanat und einem Blockcopolyoxyalkylen-polyamin gemäß Beispiel 1, A-Komponente.

100 Gew.-Teile der A-Komponente und 62,8 Gew.-Teile der B-Komponente — entsprechend einem Isocyanatindex von 105 — wurden analog den Angaben von Beispiel 1 zu Testplatten verarbeitet.

Die A- und B-Komponenten sowie die Metallform wurden hierbei jeweils auf 50 °C temperiert.

An den Testplatten wurden folgende mechanische Eigenschaften gemessen :

| | | |
|---|---|---|
| Rohdichte | [$g/cm^3$] | 106 |
| Knicktest[1)] | [sec] | 30 |
| Reißdehnung | [%] | 430 |
| Reißfestigkeit | ]$N/mm^2$] | 29 |
| Weiterreißfestigkeit | [N/mm] | 83 |
| Wärmeformbeständigkeit[2)] | [°C] | 150 |

(Fortsetzung)

| | | |
|---|---|---|
| Härte | [Shore-D] | 56 |
| Biege-E-Modul | | |
| -30°C | [$N/mm^2$] | 650 |
| 23°C | [$N/mm^2$] | 310 |
| 65°C | [$N/mm^2$] | 240 |

[1] Die Prüfplatten zeigten zu diesem Zeitpunkt beim Umbiegen um 180° keine Rißbildung.
[2] nach ISO-R-75 Methode B.

**Patentansprüche**

1. Verfahren zur Herstellung von kompakten oder zellhaltigen Formkörpern auf Basis von Polyharnstoff-Polyurethan-Elastomeren durch Umsetzung von

a) organischen Polyisocyanaten,
b) Polyether-polyaminen und
c) Kettenverlängerungsmitteln in Gegenwart von gegebenenfalls
d) Treibmitteln,
e) Hilfsmitteln und/oder
f) Zusatzstoffen

dadurch gekennzeichnet, daß man als Polyether-polyamine (b) Polyoxyalkylen-polyamine mit einer Funktionalität von 2 bis 8 und einem Molekulargewicht von 1 100 bis 16 000 und als Kettenverlängerungsmittel (c) di- bis tetrafunktionelle aliphatische und/oder araliphatische Polyole mit Molekulargewichten von 60 bis 400 oder Mischungen aus den genannten Polyolen und primären aromatischen Diaminen in Mengen von 5 bis 150 Gew.-Teilen pro 100 Gew.-Teilen Polyoxyalkylenpolyamine (b) verwendet und das Äquivalenzverhältnis von NCO-Gruppen der Polyisocyanate (a) zu Zerewitinoff aktiven Wasserstoffatomen gebunden an OH- und $NH_2$-Gruppen der Komponenten (b) und (c) 1 : 0,85 bis 1,25 beträgt.

2. Verfahren nach Anspruch 1, dadurch gekennzeichnet, daß die Reaktivität der primären Aminogruppen der aromatischen Diamine gegenüber Polyisocyanaten nicht durch elektronenanziehende Substituenten herabgesetzt ist.

3. Verfahren nach Anspruch 1, dadurch gekennzeichnet, daß die primären Aminogruppen der aromatischen Diamine sterisch gehindert sind.

4. Verfahren nach Anspruch 1, dadurch gekennzeichnet, daß die Komponenten a) bis c) und ggf. d) bis f) als one-shot-System nach der Reaktionsspritzgußtechnik verarbeitet werden.

5. Verfahren nach Anspruch 1, dadurch gekennzeichnet, daß die Polyoxyalkylen-polyamine (b) Strukturen der allgemeinen Formeln

$$H_2N{-}(R^2O)_x{-}R^1{-}NH_2, \quad (I)$$

$$H_2N{-}R^1{-}(OR^2)_x{-}NH{-}(R^2O)_y{-}R^1{-}NH_2, \quad (II)$$

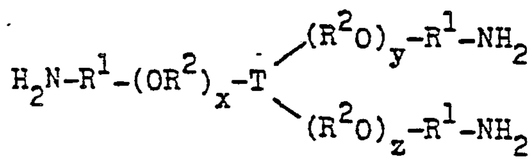

(III)

und/oder

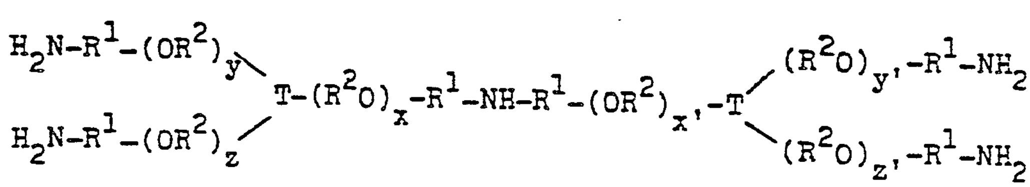

(IV)

besitzen, in denen bedeuten:

$R^1$ und $R^2$ gleiche oder verschiedene, gegebenenfalls substituierte Alkylenreste mit 2 bis 10 Kohlenstoffatomen, wobei die Alkylenreste $R^2$ der Alkoxygruppen ebenfalls gleich oder verschieden sind,

T eine keine reaktive Wasserstoffatome enthaltender Rest eines trifunktionellen Startermoleküls für die Alkylenoxidpolymerisation und

x, x′, y, y′, z und z′ gleiche oder verschiedene ganze Zahlen größer als null.

**Claims**

1. A process for the preparation of non-cellular or cellular molded parts based on polyurea-polyurethane elastomers by reacting

a) organic polyisocyanates,
b) polyether polyamines, and
c) chain extenders in the presence or absence of
d) blowing agents,
e) auxiliaries and/or
f) additives,

wherein the polyether polyamines (b) used are polyoxyalkylene polyamines having a functionality of from 2 to 8 and a molecular weight of from 1,100 to 16,000, and the chain extenders (c) used are di- to tetrafunctional aliphatic and/or araliphatic polyols having a molecular weight of from 60 to 400, or mixtures of the said polyols and primary aromatic diamines, in amounts of from 5 to 150 parts by weight per 100 parts by weight of polyoxyalkylene polyamines (b), and the equivalency ratio of NCO groups of polyisocyanates (a) to the Zerewitinoff-active hydrogen atoms bonded to OH and $NH_2$ groups of components (b) and (c) is 1 : 0.85-1.25.

2. A process as claimed in claim 1, wherein the reactivity of the primary amino groups of the aromatic diamines toward polyisocyanates is not reduced by electron-attracting substituents.

3. A process as claimed in claim 1, wherein the primary amino groups of the aromatic diamines are sterically hindered.

4. A process as claimed in claim 1, wherein components (a) to (c) and, if desired, (d) to (f) are processed as a one-shot system by a reaction injection molding technique.

5. A process as claimed in claim 1, wherein the polyoxyalkylene polyamines (b) have the general structural formulae

$$H_2N-(R^2O)_x-R^1-NH_2 \qquad (I)$$

$$H_2N-R1-(OR^2)_x-NH-(R^2O)_y-R^1-NH_2, \qquad (II)$$

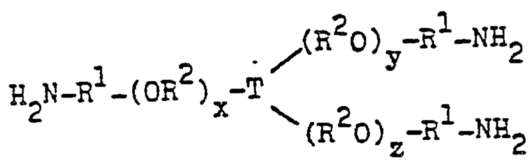

(III)

and/or

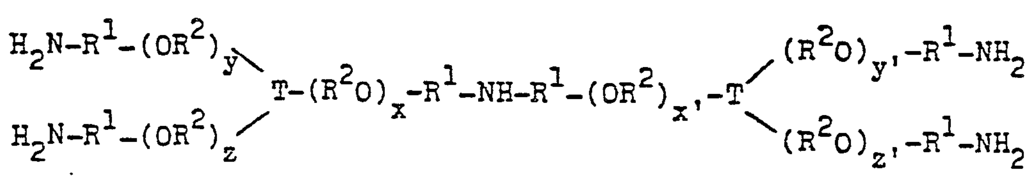

(IV)

where

$R^1$ and $R^2$ are identical or different optionally substituted alkylene radicals of 2 to 10 carbon atoms, the alkylene radicals $R^2$ of the alkoxy groups also being identical or different,

T is a radical of a trifunctional initiator molecule for the alkylene oxide polymerization, which radical does not contain any reactive hydrogen atoms, and

x, x', y, y', z and z' are identical or different integers greater than 0.

**Revendications**

1. Procédé de fabrication de corps moulés compacts ou cellulaires à base d'élastomères de polyurée-polyuréthane par réaction de

a) polyisocyanates organiques,
b) polyéther-polyamines et
c) agents d'allongement de chaîne, en présence le cas échéant de
d) agents moussants,
e) agents auxiliaires et/ou

f) adjuvants,

caractérisé en ce qu'on utilise, en tant que polyéther-polyamines (b), des polyoxyalkylène-polyamines ayant une fonctionnalité de 2 à 8 et un poids moléculaire de 1 100 à 16 000 et, en tant qu'agents d'allongement de chaîne (c), des polyols aliphatiques et/ou araliphatiques tétrafonctionnels ayant des poids moléculaires de 60 à 400 ou des mélanges des polyols mentionnés et de diamines aromatiques primaires dans des proportions de 5 à 150 parties en poids pour 100 parties en poids de polyoxyalkylène-polyamine (b) et en ce que le rapport d'équivalence des groupes NCO des polyisocyanates (a) aux atomes d'hydrogène actifs d'après la réaction de Zerewitinoff, fixés aux groupes OH et $NH_2$ des composants (b) et (c) est compris entre 1 : 0,85 et 1 : 1,25.

2. Procédé selon la revendication 1, caractérisé en ce que la réactivité des groupements amino primaires des diamines aromatiques à l'égard des polyisocyanates n'est pas abaissée par des substituants attirant les électrons.

3. Procédé selon la revendication 1, caractérisé en ce que les groupements amino primaires des diamines aromatiques sont empêchés stériquement.

4. Procédé selon la revendication 1, caractérisé en ce que les composants a) à c) et éventuellement d) à f) sont mis en œuvre en tant que système « one-shot » (en une seule fois) suivant la technique de moulage réactif par injection.

5. Procédé selon la revendication 1, caractérisé en ce que les polyoxyalkylène-polyamines (b) ont des structures correspondant aux formules générales

$$H_2N—(R^2O)_x—R^1—NH_2, \quad (I)$$

$$H_2N—R^1—(OR^2)_x—NH—(R^2O)_y—R^1—NH_2, \quad (II)$$

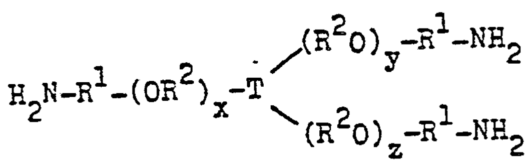

(III)

et/ou

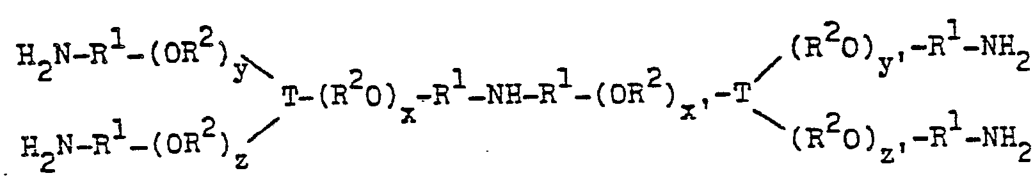

(IV)

dans lesquelles

$R^1$ et $R^2$, identiques ou différents, représentent des radicaux alkylène à 2-10 atomes de carbone éventuellement substitués, les radicaux alkylène $R^2$ des groupes alcoxy étant également identiques ou différents,

T représente un radical, ne contenant pas d'atomes d'hydrogène réactifs, d'une molécule de déclenchement trifonctionnelle pour la polymérisation de l'oxyde d'alkylène et

x, x', y, y', z et z' sont des nombres entiers, identiques ou différents, supérieurs à zéro.